# EUROPÄISCHE PATENTSCHRIFT

(11) **EP 3 298 903 B1**
(45) Veröffentlichungstag und Bekanntmachung des Hinweises auf die Patenterteilung: **18.11.2020**
(21) Anmeldenummer: 16190754.8
(22) Anmeldetag: 27.09.2016
(51) Int. Cl.: A23C 1/12, A23C 3/02, A23C 7/04, A23C 9/142, A23C 9/15, A23C 9/13, A23C 9/148, A23C 9/16

(54) **KEIMARME MILCHPULVER MIT HOHEM MOLKENPROTEININDEX (IV)**
LOW-GERM MILK POWDERS WITH HIGH WHEY PROTEIN INDEX (IV)
LAIT EN POUDRE PAUVRE EN GERMES AVEC HAUT INDEX DE PROTÉINES DE LACTOSÉRUM (IV)

(43) Veröffentlichungstag der Anmeldung: 28.03.2018
(73) Patentinhaber: DMK Deutsches Milchkontor GmbH, 27404 Zeven (DE)
(72) Erfinder: WIEGERS, Torben, 27404 Zeven (DE)
(74) Vertreter: Fabry, Bernd

(56) Entgegenhaltungen:
- EP-A1- 2 679 098
- US-A1- 2002 155 203
- US-A1- 2012 015 082
- US-A1- 2014 170 266
- US-B1- 6 635 296

## Beschreibung

### GEBIET DER ERFINDUNG

Die Erfindung befindet sich auf dem Gebiet der Milchprodukte und betrifft ein neues Verfahren zur Herstellung keimarmer Milchpulver mit einem Molkenproteinindex (MPI) von mindestens 2.

### STAND DER TECHNIK

Zur Herstellung von keimarmen Milchpulvern wird beispielsweise bereits pasteurisierte Magermilch mit etwa 9 % Trockenmasse auf eine Konzentration von etwa 40 % eingedampft. Die Konzentrate enthalten jedoch noch eine große Menge an thermoresistenten Keimen und Sporen, insbesondere aus der Maissilage, mit denen die Kühe gefüttert werden und die infolge nicht ausreichender Stallhygiene schließlich in der Rohmilch landen. Aus diesem Grunde ist es bislang erforderlich, die Konzentrate vor dem Versprühen einer Hocherhitzung zu unterwerfen, mit deren Hilfe die Keime und Sporen quantitativ zerstört werden und aus der ein keimfreies und hochqualitatives Produkt resultiert.

Allerdings wirkt sich die Hocherhitzung nicht nur auf die Keime und Sporen aus, es werden auch die wertvollen Molkenproteine ganz oder ganz überwiegend denaturiert und damit das Produkt in seiner Funktionalität und Ernährungsphysiologie nachteilig verändert. Molkenproteine gehören zu den Albuminen und Globulinen; dazu zählen insbesondere das alpha-Lactalbumin und das beta-Lactoglobulin, Serumalbumin, Proteosepepton und die Immunoglobuline. Molkenproteine stellen ernährungsphysiologisch betrachtet hochwertige Milchbestandteile dar und dienen beispielsweise in Eiweißpräparaten speziell zum Muskelaufbau. Während unbehandelte Magermilch als Maßzahl für den Gehalt an Molkenproteinen einen so genannten Molkenproteinindex (MPI, englisch WPNI) oberhalb von 6, speziell von 6,1 aufweist, nimmt dieser bei der üblichen Ultrahocherhitzung auf Werte unter 1 ab, was ausgesprochen unerwünscht ist.

Eine Alternative würde darin bestehen, die Temperaturbehandlung bei niedrigeren Temperaturen, etwa bei 70 °C anstelle von über 100 °C durchzuführen. In der Tat weisen die so erhaltenen Produkte einen MPI/WPNI oberhalb von 5 auf, allerdings ist die Keimbelastung so hoch, dass Produkte erhalten werden, die allenfalls eingeschränkt verkaufsfähig sind.

In diesem Zusammenhang sei auf die CN 2011 1116530 A1 verwiesen, die ein Verfahren zur Herstellung von Niedrigtemperatur-Milchpulver offenbart, bei dem man Magermilch bei 40 bis 50 °C einer Mikrofiltration über eine anorganische Membran mit einem Porendurchmesser von 0,8 bis 1,4 µm filtriert. Anschließend wird das MF-Produkt bei 72 bis 78 °C sterilisiert und bei 45 bis 75 °C in einem Fallfilmverdampfer aufkonzentriert. Es schließt sich eine Sprühtrocknung an, wobei die Temperatur im Einlass bei 180 bis 200 °C und am Ausgang 80 bis 105 °C beträgt. Die Schrift enthält weder Angaben über den MPI der resultierenden Produkte noch über deren Keimbelastung.

Auch aus der EP 2679098 A1 (DMK) ist ein Verfahren zur Herstellung von keimarmen Milchpulvern bekannt, bei dem ein Mikrofiltrationsschritt zur Abtrennung der Keime dient; diese Anmeldung enthält jedoch keinen Hinweis auf die Herstellung von Pulvern, die mit Wirkstoffen angereichert sind.

Das Dokument US 2014/0170266 A1 offenbart ein Verfahren zur Herstellung einer auf Milch basierenden Zusammensetzung umfassend die folgenden Schritte
(a) Behandeln der Milch, so dass mindestens 98% der Keime entfernt werden,
(b) Behandeln der Milch mit einem Mikrofilter einer Porengröße von 0,01-2 µm, so dass mindestens eine Casein-reiche Fraktion und eine Serumprotein-reiche Fraktion erhalten werden,
wobei die Milch vor oder nach der Mikrofiltration einer Erwärmungsbehandlung unterworfen wird und wobei während der Herstellung des Produktes die Milch und die aus der Milch gewonnenen Produkte keiner Wärmebehandlung bei einer Temperatur über 90 °C ausgesetzt werden und wobei die Serumprotein-reiche Fraktion und/oder die Casein-reiche Fraktion zu einem Nahrungsmittelprodukt verarbeitet wird/werden

Das Dokument US 2002/0155203 A1 offenbart ein Verfahren und Anlage für die Herstellung eines Milch- oder Molkeprodukts mit verringertem Sporen- und Bakteriengehalt. Das beschriebene Verfahren umfasst folgende Schritte:
- Bereitstellung einer Milch (M) als Rahmfraktion (CR) und entrahmte Milchfraktion (SM),
- Sterilisierung der Rahmfraktion (CR), die Sporen und Bakterien enthält,
- Mikrofiltration (MF) der Magermilchfraktion (SM), die Sporen und Bakterien und Fett enthält, welche zu einer Trennung in ein Retentat mit einem erhöhten Gehalt an Mikroorganismen und Fett und in ein Permeat, das aus Magermilch mit einem reduzierten Gehalt an Mikroorganismen und Fett besteht, führt, und
- Vermischung der sterilisierten Rahmfraktion (SCR) und das Permeat in einem bestimmten Verhältnis zur Herstellung des Milchprodukts.

Für die Herstellung von Milchpulver, die speziell der Säuglings- und Kleinkindernährung dienen, sind indes besonders hohe Anforderungen gestellt: abgesehen davon, dass ein definiertes Molkenprotein/Kaseinverhältnis erwünscht ist, müssen die Produkte praktisch keimfrei sein, um die noch in der Entwicklung befindliche Darmflora nicht zu schädigen. Gleichzeitig sollen die Pulver aber auch noch eine Vielzahl weiterer Wirkstoffe und Additive enthalten, die der Ernährung und kindlichen Entwicklung zuträglich sind, wie beispielsweise (Milch)fette, Vitamine, Kohlenhydrate, Peptide oder Aminosäuren, langkettige ungesättigte Fettsäuren und dergleichen. Da diese Stoffe in der Regel weder steril hergestellt noch steril gelagert sind, weisen sie eine beachtliche Keimzahl auf, die beim Vermischen mit der durch Mikrofiltration gerade erst entkeimten Milchkomponente, wieder zu einer unerwünschten Kontaminierung führt. Dies ist umso kritischer anzusehen, da insbesondere zugesetzte Pulverprodukte häufig pathogene Keime wie *Cronobacter Sakazakii, Salmonella Enterica, Staphyllococcus Aureus* oder *Lysteria Monocytogenes* enthalten, die - das versteht sich von selbst - in Babynahrung definitiv nichts zu suchen haben.

Die Aufgabe der vorliegenden Erfindung hat somit darin bestanden, Milchpulver, und zwar sowohl Mager- als auch Vollmilchpulver zur Verfügung zu stellen, die sowohl keimfrei bzw. keimarm sind, wie sie bisher nur nach den Hochtemperaturverfahren erhalten werden, als auch einen hohen MPI/WPNI von mindestens 2, speziell mindestens 4 und insbesondere 5,5 bis 6 und darüber zur Verfügung zu stellen, wie sie aus Niedrigtemperaturverfahren erhalten werden, obwohl diese beiden Parameter bislang stets einen entgegengesetzten Verlauf zeigen. Die Pulver sollten gleichzeitig mit fettlöslichen wie auch wasserlöslichen Zusatzstoffen additiviert sein, ohne dass dadurch weitere Keime eingetragen werden. Das Verfahren sollte zudem mit geringem technischem Aufwand durchführbar sein.

### BESCHREIBUNG DER ERFINDUNG

Die Erfindung betrifft ein Verfahren zur Herstellung keimarmer Milchpulver mit einem MPI von mindestens 2, umfassend die folgenden Schritte:
(a) Bereitstellen einer Vollmilch ;
(b) Abtrennung des Rahms von der Vollmilch und Pasteurisierung in einem Wärmeaustauscher für eine Verweilzeit von 20 bis 60 Sekunden bei einer Temperatur von 70 bis 80°C;
(c) Lösen einer festen Wirkstoffphase, die Proteine und wasserlösliche Wirkstoffe enthält, in Wasser oder Magermilch;
(d) gemeinsame Mikrofiltration der vom Rahm befreiten Magermilch aus Schritt (b) mit der flüssigen Wirkstoffphase aus Schritt (c) unter Erhalt eines keimarmen Permeats P1 und eines keimbelasteten Retentats R1, wobei die Mikrofiltration mit einer Keramikmembran durchgeführt wird, die einen Durchmesser um Bereich 1,3 bis 1,4 µm aufweist,
   und wobei das Permeat P1 vor dem Vermischen auf eine Trockenmasse von 30 bis 55 Gew.-% konzentriert;
(e) Vermischen des Permeats P1 mit einer flüssigen Lipidphase, die Lipide, Vitamine, und fettlösliche Wirkstoffe enthält; und
(e) Verarbeitung der Mischung aus Schritt (e) zu einem trockenen Pulver.

Überraschenderweise wurde gefunden, dass das erfindungsgemäße Verfahren die Herstellung auch gerade von für die Baby- und Kleinkinderernährung zulässigen additivierter Milchpulver erlaubt, die gleichzeitig einen hohen MPI von mindestens 2 und von bis zu 7,5, vorzugsweise von etwa 3,5 bis 6 und insbesondere etwa 4 bis etwa 5 aufweisen und dennoch praktisch keimfrei sind, nämlich sowohl bezüglich der thermophilen als auch der mesophilen Keime eine Keimzahl von maximal 500, in Abhängigkeit von der Verfahrensführung sogar von insgesamt (thermophile + mesophile Keime) etwa 100 bis etwa 500 aufweisen. Erfindungsgemäß werden Produkte erhalten, die keine pathogenen Keime mehr aufweisen. Ein besonderes Interesse im Sinne einer zusätzlichen Aufgabe darin bestanden hat, das erfindungsgemäße Verfahren so auszugestalten, dass die Temperaturnachbehandlung entbehrlich wird

### RAHMABTRENNUNG

Die Entrahmung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt und damit bereits einmal pasteurisiert wird.

Die Abtrennung von Feststoffen ("Käsestaub") sowie die Entrahmung des Fettanteils von etwa 4 Gew.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/molkereitechnik/milch-molke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### MIKROFILTRATION

Die Mikrofiltration ist ein Verfahren zur Stoffabtrennung. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

In der Milchtechnik hat bislang das Vorurteil geherrscht, zur Abtrennung von Mikroorganismen und Fettbestandteilen in der Rohmilch dürfe der Porendurchmesser einen Wert von 0,5 µm nicht unterschreiten. Die Erfindung schließt jedoch die Erkenntnis ein, dass zur Herstellung einer Rohmilch der Güteklasse I ein Durchmesser im Bereich von 1,4 µm nämlich von 1,3 bis 1,4 µm völlig ausreichend ist, wenn zuvor die Mehrzahl der thermolabilen Keime durch eine entsprechende thermische Behandlung abgetrennt worden ist. In Kombination dieses im Vergleich größeren Porendurchmessers mit einer Mikrofiltrationseinrichtung, die im Wesentlichen aus einer Keramikmembran besteht, wird gleichzeitig das Problem der häufigen Verstopfung gelöst.

Die Mikrofiltration kann grundsätzlich im Bereich von etwa 6 bis etwa 60 °C durchgeführt werden. Allerdings besteht das Vorurteil, dass die Abtrennung von Keimen mit Hilfe von Filtrationsschritten eine Temperatur von mindestens 55 °C bis etwa 60°C erfordert, da nur unter diesen Bedingungen ausreichende Durchsätze erzielt werden können., während bei Temperaturen von beispielsweise 20 bis 30 °C nur Durchflusswerte von maximal 100 l/m²h erzielt werden. Die Filtration in der Wärme ist auch vorliegenden Verfahren möglich, hat indes den wesentlichen Nachteil, dass die thermoresistenten Keime und Sporen nach etwa 4 Stunden Filtrationszeit beginnen, die Membranen zu durchwachsen und sich wieder im Permeat zu vermehren. Im Rahmen des erfindungsgemäßen Verfahrens besteht daher ein besonderer Vorteil darin, die Filtration in der Kälte, also bei etwa 6 bis etwa 30 °C und vorzugsweise etwa 8 bis etwa 20 °C durchzuführen, da das Durchwachsen der Keime auf diese Weise verhindert und dennoch überraschenderweise ein Durchfluss von 200 bis 300 l/m²h erzielt wird.

Die feste Wirkstoffphase, die Proteine und wasserlösliche Wirkstoffe enthält, wird in Wasser oder Magermilch gelöst und mit in die Mikrofiltration gegeben. Auf diese Weise werden die im Pulver enthaltenen Keime auf dieser Stufe entfernt, so dass eine Temperaturnachbehandlung nicht erforderlich wird.

### KONZENTRIERUNG

Im Rahmen der Mikrofiltration wird ein keimarmes bis keimfreies Permeat P1 erhalten, das weiter verarbeitet wird sowie ein Retentat, das in der Regel wegen seiner hohen Keimbelastung verworfen wird.

Ein Schritt schließt sich nun an, bei dem dem Permeat Wasser entzogen und es auf eine Trockenmasse von etwa 30 bis etwa 55 Gew.-% und insbesondere etwa 35 bis etwa 45 % Gew.-% konzentriert wird. Hierfür eignen sich konventionelle Eindampfer besonders.

### VERMISCHUNG

Die Vermischung kann in jedem konventionellen Rührbehälter durchgeführt werden, sofern dieser sich erwärmen lässt. Die Permeatphase, gegebenenfalls nach der Konzentrierung wird mit einer Lipidphase vermischt. In der Lipidphase finden sich Lipide, Vitamine sowie fettlösliche Wirkstoffe, wie langkettige ungesättigte Fettsäuren und dergleichen. Da die Fettphase leicht fest wird, empfiehlt es sich, die Vermischung bei Temperaturen im Bereich von etwa 60 °C durchzuführen. Dem gegenüber sind in der festen Wirkstoffphase Proteine und wasserlösliche Substanzen enthalten.

**PASTEURISIERUNG** Um zu vermeiden, dass das Mischprodukt über die Lipid- und Pulverphase erneut durch Keime in unerwünschter Weise belastet ist, wird das Produkt gewöhnlich einer Temperaturbehandlung unterworfen. Dabei kann es sich um eine übliche Pasteurisierung handeln, vorzugsweise jedoch um eine Ultrahocherhitzung, bei der Mischung über einen Zeitraum von etwa 1 bis etwa 5 Sekunden auf Temperaturen von 90 bis 140 °C erhitzt wird. Die thermische Belastung ist unter diesen Umständen hoch genug, um die Keimzahl den Vorgaben gemäß zu vermindern, ohne jedoch die empfindlichen Molkenproteine zu denaturieren.

### TROCKNUNG

Nach der Temperaturbehandlung wird das erwärmte Konzentrat in ein trockenes Pulver überführt. Hierfür kommen Bandtrocknung, Gefriertrocknung und insbesondere Sprühtrocknung in Frage. Die Mischungen werden in der Regel bei 180 bis 260 °C und vorzugsweise etwa 200 °C auf den Turm gegeben und verlassen diesen nach Durchlaufen verschiedener Wärmetauschereinheiten mit einer Temperatur im Bereich von 25 bis 35 °C.

Die Pulver enthalten in der Regel eine Restfeuchte von 1 bis 5, vorzugsweise 2 bis 3 Gew.-%, in welchem das Fett in Form von Einschlüssen mehr oder weniger gleichmäßig in den fettfreien Trockensubstanzen, d.h. Proteinen, Zuckern und Salzen verteilt ist.

Ein besonderes Interesse im Sinne einer zusätzlichen Aufgabe hat darin bestanden, das erfindungsgemäße Verfahren so auszugestalten, dass die Temperaturnachbehandlung entbehrlich wird.

Das erfindungsgemäße Verfahren kann die Zusatzaufgabe lösen. Dabei wird vor allem die Erkenntnis berücksichtigt, dass von der Lipidphase praktisch keine Verkeimungsgefahr ausgeht, sondern nur die Pulverphase kritisch zu sehen ist und hierbei insbesondere die Phase, in der unter anderem Molkenproteine, so genannte WPC (Whey Protein Concentrates) zugesetzt werden.

### VERGLEICHSBEISPIEL V1

Rohmilch wurde in an sich bekannter Weise von festen Bestandteilen befreit, pasteurisiert und entrahmt, so dass eine Magermilch mit einer Trockenmasse von ca. 9 Gew.-% resultierte. Diese Mischung wurde bei 60 °C mit einer Lipidphase enthaltend Milchfett, Vitamine und Lactose sowie einer wasserfreien Pulverphase, in der sich Molkenproteine befanden, bestand intensiv vermischt. Anschließend wurde die Mischung schonend auf eine Trockenmasse von ca. 40 Gew.-% eingedampft. Das so erhaltene Konzentrat wies einen MPI von 6,1 auf wurde über einen Zeitraum von etwa 5 Sekunden einer Hocherhitzung bei 120 °C unterworfen und dabei Sporen und andere Keime quantitativ zerstört. Es wurde ein keimfreies Konzentrat erhalten, das anschließend über einen Turm versprüht wurde. Es wurde ein praktisch keimfreies Hochtemperatur Magermilchpulver mit einem MPI/WPNI von nur 1,3 erhalten.

### VERGLEICHSBEISPIEL V2

Beispiel V1 wurde wiederholt, statt der Hocherhitzung bei 105 °C jedoch eine Temperaturbehandlung über ebenfalls 5 Sekunden bei 70 °C durchgeführt. Nach dem Versprühen wurde ein Niedrigtemperatur Magermilchpulver mit einem MPI/WPNI von 5,9 erhalten, das jedoch keimbelastet (thermophile und mesophile Keime jeweils > 1.000) und daher für den Verzehr nur eingeschränkt geeignet war.

### VERGLEICHSBEISPIEL V3

Beispiel V2 wurde wiederholt, die Magermilch jedoch vor der Eindampfungsstufe einer Mikrofiltration unter Einsatz einer Keramikmembran mit einer Porenweite von 1,3 µm bei 55 °C unterworfen. Das Retentat wurde verworfen, das Permeat wie oben beschrieben mit der Lipid- und Pulverphase vermischt und dann eingedampft Anschließend wurde das Konzentrat bei ca. 120 °C über 5 Sekunden temperaturbehandelt und versprüht. Es wurde ein Magermilchpulver mit einem MPI/WPNI von 6,8 erhalten, das praktisch keimfrei (thermophile und mesophile Keime jeweils < 500) war.

### BEISPIEL 1

Beispiel 1 wurde wiederholt, jedoch die Pulverphase in Wasser gelöst und zusammen mit der Magermilch einer Mikrofiltration unter Einsatz einer Keramikmembran mit einer Porenweite von 1,3 µm bei 55 °C unterworfen. Das Retentat wurde verworfen, das Permeat wie oben beschrieben mit der Lipidphase vermischt und dann eingedampft Anschließend wurde das Konzentrat ohne weitere Temperaturbehandlung versprüht. Es wurde ein Magermilchpulver mit einem MPI/WPNI von 7,0 erhalten, das keimfrei (thermophile Keime < 100 und mesophile Keime < 400) war.

### VERGLEICHSBEISPIEL V4

Magermilch wurde einer Mikrofiltration unter Einsatz einer Keramikmembran mit einer Porenweite von 0,1 µm bei 55 °C unterworfen und ein proteinreiches Permeat und ein kaseinreiches Retentat erhalten. Das Permeat wurden zusammen mit einer weiteren unbehandelten Magermilchfraktion einer zweiten Mikrofiltration unter Einsatz einer Keramikmembran mit einer Porenweite von 1,3 µm unterworfen. Das Retentat wurde verworfen, das Permeat wie oben beschrieben mit der Lipidphase sowie einer Pulverphase, die im Wesentlichen aus Vitaminen und Lactose bestand vermischt und dann eingedampft Anschließend wurde das Konzentrat ohne weitere Temperaturbehandlung versprüht. Es wurde ein Magermilchpulver mit einem MPI/WPNI von 7,0 erhalten, das ebenfalls keimfrei (thermophile Keime < 100 und mesophile Keime < 400) war.

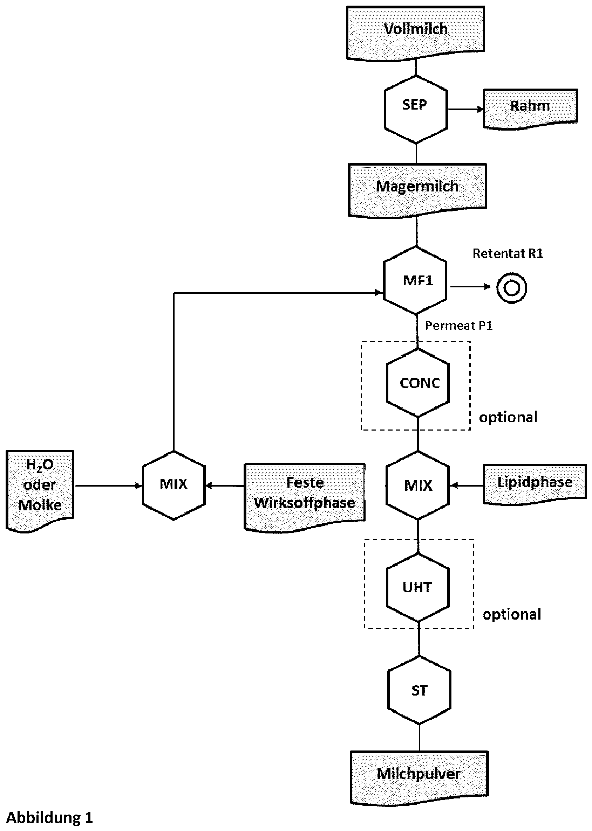

Die Beispiele 1 bis 3 werden nachfolgend in einem Fließschema (**Abbildung 1**) weiter erläutert. Dabei bedeuten die Abkürzungen:
- SEP: = Separator
- MF1: = Mikrofiltration mit 1,3 µm-Membran
- MF2: = Mikrofiltration mit 0,1 µm-Membran
- CONC: = Eindampfer
- MIX: = Mischer
- UHT: = Ultrahocherhitzer
- ST: = Sprühturm

## Patentansprüche

1. Verfahren zur Herstellung keimarmer Milchpulver mit einem Molkenproteinindex (MPI) von mindestens 2, umfassend die folgenden Schritte:
(a) Bereitstellen einer Vollmilch;
(b) Abtrennung des Rahms von der Vollmilch und Pasteurisierung in einem Wärmeaustauscher für eine Verweilzeit von 20 bis 60 Sekunden bei einer Temperatur von 70 bis 80°C;
(c) Lösen einer festen Wirkstoffphase, die Proteine und wasserlösliche Wirkstoffe enthält, in Wasser oder Magermilch;
(d) gemeinsame Mikrofiltration der vom Rahm befreiten Magermilch aus Schritt (b) mit der flüssigen Wirkstoffphase aus Schritt (c) unter Erhalt eines keimarmen Permeats P1 und eines keimbelasteten Retentats R1, wobei die Mikrofiltration mit einer Keramikmembran durchgeführt wird, die einen Durchmesser um Bereich 1,3 bis 1,4 µm aufweist,
und wobei das Permeat P1 vor dem Vermischen auf eine Trockenmasse von 30 bis 55 Gew.-% konzentriert;
(e) Vermischen des Permeats P1 mit einer flüssigen Lipidphase, die Lipide, Vitamine, und fettlösliche Wirkstoffe enthält; und
(f) Verarbeitung der Mischung aus Schritt (e) zu einem trockenen Pulver.

2. Verfahren nach Anspruch 1, **dadurch gekennzeichnet, dass** man die Mikrofiltration bei einer Temperatur im Bereich von 6 bis 30 °C durchführt.

## Claims

1. A process for the production of low-bacteria milk powders with a whey protein nitrogen index (WPNI) of at least 2, comprising the following steps:
(a) providing a whole milk;
(b) Separating the cream from the whole milk and pasteurization in a heat exchanger for a residence time of 20 to 60 seconds at a temperature of 70 to 80 ° C;
(c) Dissolving a solid active agent phase containing proteins and water-soluble active ingredients in water or skimmed milk;
(d) common microfiltration of the skimmed milk of step (b), from which the cream had been separated, with the liquid active agent phase of step (c), obtaining a low-bacteria permeate P1 and a bacteria-contaminated retentate R1, wherein the microfiltration is performed with a membrane having a pore size of 1.3 to 1.4 µm on average,
and wherein the permeate P1 is concentrated to a dry matter content from 30 to 55% by weight before mixing;
(e) mixing the permeate P1 with a liquid lipid phase containing lipids, vitamins, and fat-soluble active agents; and
(f) processing of the mixture of step (e) obtaining a dry powder.

2. Process according to claim 1, wherein the microfiltration is performed at a temperature in the range from about 6 to about 30 °C.

## Revendications

1. Un procédé de production de poudres de lait à faible teneur en germes ayant un indice de protéine de lactosérum (IPM) d'au moins 2, comprenant les étapes suivantes
(a) fourniture d'un lait entier ;
(b) séparation de la crème du lait entier et pasteurisation dans un échangeur de chaleur pendant un temps de séjour de 20 à 60 secondes à une température de 70 à 80 °C ;
(c) dissolution d'une phase de substance active solide contenant des protéines et des substances actives hydrosolubles dans l'eau ou le lait écrémé ;
(d) microfiltration conjointe du lait écrémé débarrassé de la crème de l'étape (b) avec la phase d'ingrédient actif liquide de l'étape (c) pour obtenir un perméat à faible teneur en germes P1 et un rétentat chargé de germes R1, dans laquelle la microfiltration est effectuée avec une membrane céramique qui a un diamètre d'environ 1,3 à 1,4 µm
et dans laquelle le perméat P1 est concentré à une matière sèche de 30 à 55 % en poids avant le mélange ;
(e) mélange du perméat P1 avec une phase lipidique liquide contenant des lipides, des vitamines et des ingrédients actifs liposolubles; et
(f) transformation du mélange de l'étape (e) en une poudre sèche.

2. Le procédé selon la revendication 1, **caractérisé en ce que** la microfiltration est effectuée à une température comprise entre 6 et 30°C.
